# EUROPÄISCHE PATENTANMELDUNG

(11) **EP 1 811 135 A1**
(43) Veröffentlichungstag der Anmeldung: **25.07.2007**
(21) Anmeldenummer: 06405029.7
(22) Anmeldetag: 23.01.2006
(51) Int. Cl.: F01D 17/16, F02C 9/22

(54) **Verstellbare Leitvorrichtung**

(71) Anmelder: ABB Turbo Systems AG, 5400 Baden (CH)
(72) Erfinder: Bättig, Josef, 5704 Egliswil (CH)
(74) Vertreter: Zimmermann, Gilbert

(57) **Zusammenfassung**

Die Leitvorrichtung mit verstellbaren Leitschaufeln ist mit einem Antrieb für die verstellbaren Leitschaufeln versehen, bei welchem ein Mitnehmerbolzen (6) und ein Verstellhebel (5) mit je einem aufeinander abgestimmten Flächenpaar (62, 52) ausgestattet sind, welche im Betrieb beim Verstellen der Leitschaufeln aufeinander gleiten. Zum Verstellen der Leitschaufel wird der Verstellring (4) bewegt, wodurch der am Verstellring befestigte Mitnehmerbolzen in einer länglichen Nut (51) des Verstellhebels gleitet und eine Kraft auf den Verstellhebel ausübt.

Durch diese Lösung entsteht eine kostengünstige und robuste Konstruktion. Es resultiert eine Flächen-Auflage mit entsprechend niedrigen Flächen-Pressungen und folglich massiv reduziertem Verschleiss.

## Beschreibung

### Technisches Gebiet

Die Erfindung bezieht sich auf das Gebiet der mit Abgasen von Brennkraftmaschinen beaufschlagten Strömungsmaschinen.
Sie betrifft eine Vorrichtung zum Übertragen einer Verstellkraft von einem Verstellring auf einen Schaufelschaft einer drehbar gelagerten Leitschaufel einer verstellbaren Leitvorrichtung der Abgasturbine oder des Verdichters eines Abgasturboladers, eine Leitvorrichtung mit einer solchen Übertragungsvorrichtung, einen Verdichter und eine Abgasturbine mit einer solchen Leitvorrichtung sowie einen Abgasturbolader mit einem solchen Verdichter und/ oder mit einer solchen Abgasturbine.

### Stand der Technik

Abgasturbolader werden zur Leistungssteigerung von Brennkraftmaschinen eingesetzt. Bei modernen Brennkraftmaschinen wird die Anpassung der Abgasturbolader an variable Betriebsbedingungen zunehmen schwieriger. Eine weit verbreitete Möglichkeit dazu bietet die so genannte variable Turbinen- und/oder Verdichtergeometrie. Bei der variablen Turbinengeometrie werden die Leitschaufeln des Leitapparates stromauf des Turbinenrades entsprechend dem Leistungsbedarf der Turbine mehr oder weniger steil zur Strömung ausgerichtet. Bei der variablen Verdichtergeometrie werden die Diffusorschaufeln stromab des Verdichterrades mehr oder weniger steil zur Strömung ausgerichtet. Die Verstellung der Schaufel erfolgt in der Regel über so genannte Verstellhebel, welche von einem konzentrisch zur Achse des Abgasturboladers angeordneten Verstellring bewegt werden. Bei Radialturbinen, bzw. Radialverdichtern steht die Leitschaufel bzw. die Diffusorschaufel in der Regel parallel zur Wellenachse. Der Schaft der Leit- bzw. Diffusorschaufel wird in einem Gehäuse vorzugsweise 2-fach gelagert und mittels eines Verstellhebels, welcher zwischen den beiden Lagerstellen am Schaufelschaft angreift, verdreht. Falls der Verstellhebel unmittelbar mittels Aussparungen im Verstellring bewegt werden soll, muss dessen Ende wie beispielsweise in EP 1 520 959 dargestellt, zylinderförmig ausgebildet werden, damit dieser nicht in der Nut verklemmt.
Auch wenn der Verstellring mit Nocken versehen ist, welche in korrespondierende Nuten der Verstellhebel eingreifen, müssen diese Nocken zylindrisch, beispielsweise als eingesetzte Mitnehmerbolzen, ausgeführt werden, wie dies EP 1 234 951 zeigt.
Zum Verstellen der Leitschaufel wird der Verstellring konzentrisch um die Turboladerachse verdreht wodurch die Leitschaufeln mittels der Verstellhebel geschwenkt werden.
Bedingt durch diese Dreh- und Schwenk-Bewegung verschiebt sich der Zylinder des Verstellhebels oder des Nutringes auf der Nutoberfläche des Nutringes resp. des Verstellhebels. Aufgrund der linienförmigen Auflage des Zylinders in den Nuten des Verstellhebels resp. Nutringes entstehen trotz bescheidenen Normalkräften sehr hohe Hertz'sche Pressungen. Bedingt durch die Relativbewegungen des Zylinders auf der Nutoberfläche sowie den hohen Flächenpressungen verschleissen die Gleitpartner im Betrieb.

### Kurze Darstellung der Erfindung

Die Aufgabe der vorliegenden Erfindung besteht darin, eine über eine lange Betriebszeit zuverlässig funktionierende Leitvorrichtung mit verstellbaren Leitschaufeln zu schaffen.
Erfindungsgemäss wird die Leitvorrichtung mit verstellbaren Leitschaufeln mit einem Antrieb für die verstellbaren Leitschaufeln versehen, bei welchem ein Mitnehmerbolzen und ein Verstellhebel mit je einem aufeinander abgestimmten Flächenpaar ausgestattet sind, welche im Betrieb beim Verstellen der Leitschaufeln aufeinander gleiten. Zum Verstellen der Leitschaufel wird der Verstellring bewegt, wodurch der am Verstellring befestigte Mitnehmerbolzen in einer länglichen Nut des Verstellhebels entlanggleitet und eine Kraft auf den Verstellhebel ausübt.
Durch diese Lösung entsteht eine kostengünstige und robuste Konstruktion. Der Mitnehmerbolzen ist einerseits beidseitig im Verstellring gelagert ist und zudem axial formschlüssig in der Nut des Vertellhebels fixiert. Es resultiert eine Flächen-Auflage mit entsprechend niedrigen Flächen-Pressungen und folglich massiv reduziertem Verschleiss. Der Verstellring kann sowohl radial innerhalb als auch ausserhalb der Leitschaufeln angeordnet sein.
Der Mitnehmerbolzen lässt sich auf einfache Weise sehr kostengünstig herstellen und ist zudem nach der Montage verliersicher mit dem Verstellring bzw. mit dem Verstellhebel verbunden. Der Verstellring weist in einer Ausführungsform einen U-förmigen Querschnitt mit einer Nut sowie eine der Anzahl Leitschaufeln entsprechenden Anzahl Bohrungen zur Aufnahme der Mitnehmerbolzen auf. Die Mitnehmerbolzen sind vorzugsweise mittig mit einer doppelseitigen parallelen Ausnehmung versehen.
Die Verstellhebel sind radial angeordnet und weisen an ihrem Ende vorteilhafterweise konzentrisch zum Schaufelschaft angeordnete Kreissegmente auf, welche mit dem Nutgrund des Verstellringes korrespondieren und so für dessen Radiallagerung sorgen.

### Kurze Beschreibung der Zeichnungen

Nachfolgend werden verschiedene Ausführungsformen der Erfindung anhand von Zeichnungen detailliert erläutert. Hierbei zeigt
- Fig. 1: einen entlang der Achse geführten Schnitt durch eine Radialturbine mit einer erfindungsgemäss ausgebildeten, verstellbaren Leitvorrichtung,
- Fig. 2: einen Schnitt senkrecht zur Achse durch die verstellbare Leitvorrichtung der Radialturbine nach Fig.1,
- Fig. 3: einen entlang der Achse geführten Schnitt durch einen Radialverdichter mit einer erfindungsgemäss ausgebildeten, verstellbaren Leitvorrichtung,
- Fig. 4: einen Schnitt senkrecht zur Achse durch die verstellbare Leitvorrichtung des Radialverdichters nach Fig. 3,
- Fig. 5: eine isometrische Detaildarstellung einer erfindungsgemäss ausgebildeten Leitvorrichtung mit einem Verstellhebel und einem Mitnehmerbolzen, und
- Fig. 6: drei verschiedene Ausführungsformen des Mitnehmerbolzens nach Fig. 5.

### Weg zur Ausführung der Erfindung

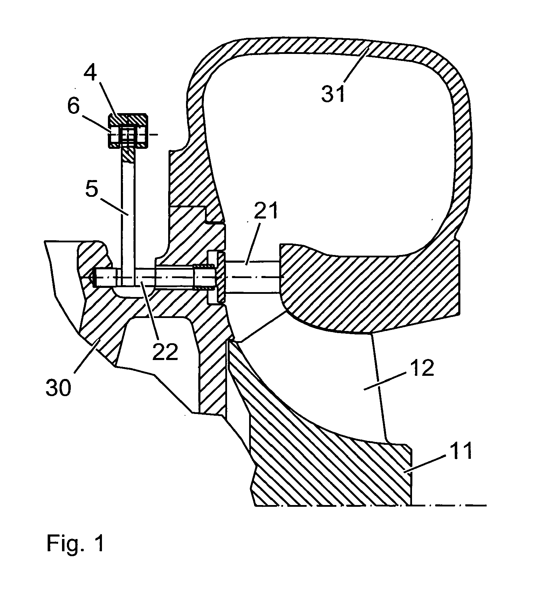

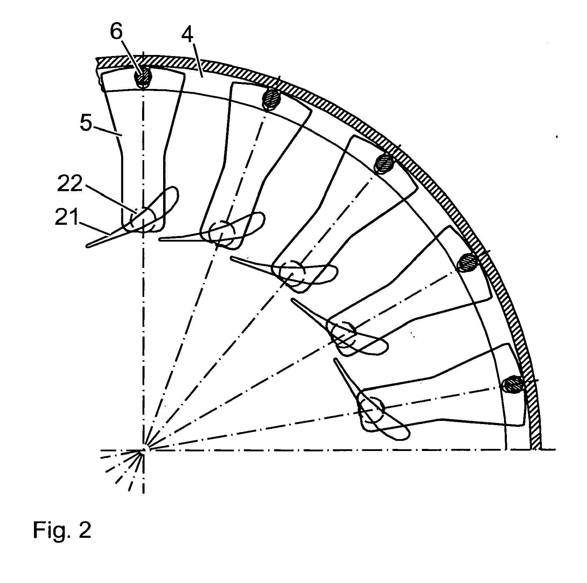

Fig. 1 und Fig. 2 zeigen eine Abgasturbine, wie sie beispielsweise in Abgasturboladern eingesetzt wird, mit einer erfindungsgemäss ausgebildeten verstellbaren Leitvorrichtung.
Die dargestellte Radialturbine umfasst ein Turbinenrad, welches auf einer in einem Lagergehäuse 30 drehbar gelagerten Welle angeordnet ist. Das Turbinenrad weist eine Nabe 11 mit einer Vielzahl von Laufschaufeln 12 auf. Die Turbinenrad-Nabe begrenzt zusammen mit dem Turbinengehäuse 31 einen Strömungskanal. In Strömungsrichtung stromauf des Turbinenrades ist der Strömungskanal durch das Lagergehäuse 30 und das Turbinengehäuse 31 begrenzt. In diesem Bereich ist eine verstellbare Leitvorrichtung angeordnet.
Die Leitvorrichtung umfasst mehrere verstellbare Leitschaufeln 21, welche jeweils um einen drehbar gelagerten Schaufelschaft 22 rotierbar sind. Leitschaufel und Schaufelschaft können form-, kraft- oder stoffschlüssig miteinander verbunden sein.
Der Schaufelschaft 22 ist in dem Lagergehäuse 30 drehbar gelagert. Zum Antrieb des Schaufelschaftes ist ein mit dem Schaufelschaft verbundener Verstellhebel 5 vorgesehen, welcher Kraft von einem bezüglich der Turbinenachse radial ausserhalb des Schaufelschaftes angeordneten Verstellring 4 auf den Schaufelschaft überträgt. Der Verstellhebel ist form-, kraft- oder stoffschlüssig mit dem Schaufelschaft verbunden.

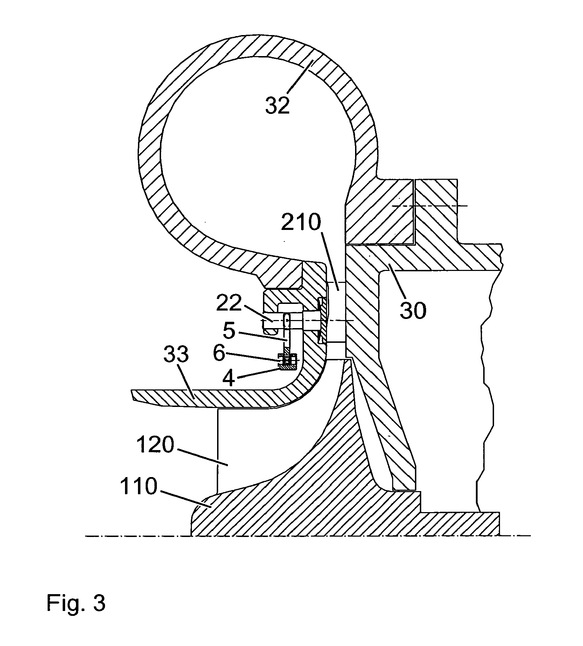

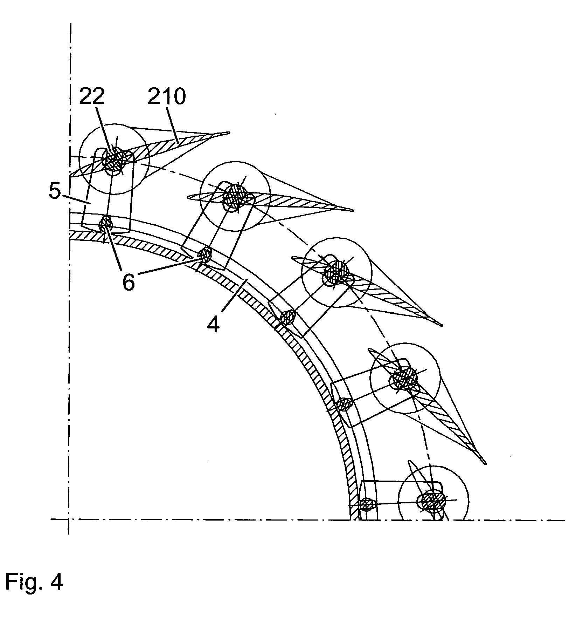

Fig. 3 und Fig. 4 zeigen einen Verdichter, wie er beispielsweise in Abgasturboladern eingesetzt wird, mit einer erfindungsgemässen Leitvorrichtung. Der dargestellte Radialverdichter umfasst ein Verdichterrad, welches auf einer in einem Lagergehäuse 30 drehbar gelagerten Welle angeordnet ist. Das Verdichterrad weist eine Nabe 110 mit einer Vielzahl von Laufschaufeln 120 auf. Die Verdichterrad-Nabe begrenzt zusammen mit einer Einsatzwand 33 einen Strömungskanal. In Strömungsrichtung stromab des Verdichterrades ist der Strömungskanal durch das Lagergehäuse und das Verdichteraustrittsgehäuse 32 begrenzt. Im Bereich des Diffusors, stromab des Verdichterrades, ist eine verstellbare Diffusor-Leitvorrichtung angeordnet.
Diese Leitvorrichtung umfasst eine Vielzahl verstellbarer Leitschaufeln 210, welche jeweils um einen drehbar gelagerten Schaufelschaft 22 rotierbar sind. Leitschaufel und Schaufelschaft können form-, kraft- oder stoffschlüssig miteinander verbunden sein.

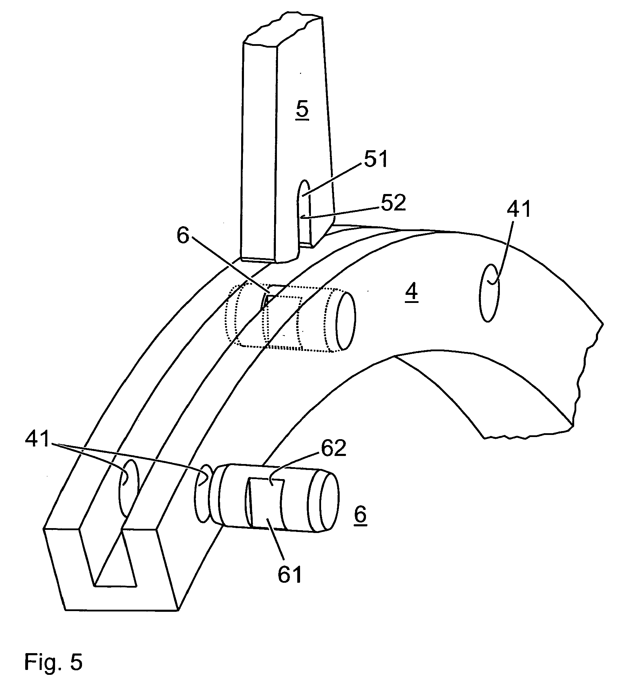

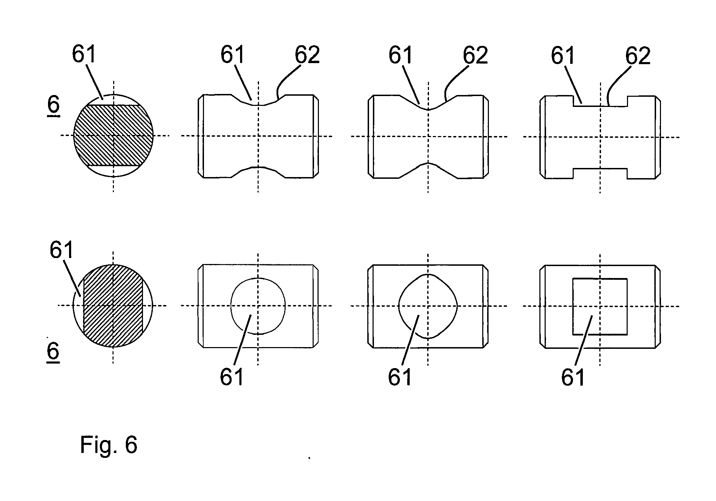

Der Schaufelschaft ist in dem Gehäuse drehbar gelagert. Zum Antrieb des Schaufelschaftes ist ein Verstellhebel 5 vorgesehen, welcher Kraft von einem bezüglich der Verdichterachse radial innerhalb des Schaufelschaftes angeordneten Verstellring 4 auf den Schaufelschaft überträgt. Der Verstellhebel ist form-, kraft- oder stoffschlüssig mit dem Schaufelschaft verbunden.
In beiden Ausführungsformen, bei innen- oder aussenliegendem Verstellring, ist in das freie Ende des Verstellhebels 5, wie dies in der Fig. 5 dargestellt ist, eine längliche Nut 51 eingelassen. In der länglichen Nut wird ein Mitnehmerbolzen 6 aufgenommen, welcher sich mit dem Verstellring auf einem konzentrisch zur Wellenachse verlaufenden Kreisbogenabschnitt bewegt. Die längliche Nut kann auch als Langloch ausgebildet sein, in welchem sich der Mitnehmerbolzen hin und her bewegen kann, welches aber verhindert, dass der Mitnehmerbolzen gänzlich aus der Nut gezogen wird.
Mitnehmerbolzen 6 und die längliche Nut 51 weisen erfindungsgemäss jeweils zwei parallele Kontaktflächen auf. Die beiden Kontaktflächen 62 des zylindrisch ausgebildeten Mitnehmerbolzens 6 sind durch gegenüberliegende, in die Mantelflächen eingelassene Ausnehmungen 61 geformt und zueinander parallel angeordnet. Die beiden Kontaktflächen 52 der länglichen Nut im Verstellhebel 5 sind ebenfalls zueinander parallel angeordneten. Die Abstände der beiden Kontaktflächen-Paare sind so gewählt, dass der Mitnehmerbolzen im Bereich der beiden Ausnehmungen 61 in die Nut 51 des Verstellhebels eingeführt werden kann und beidseitig mit den Oberflächen der Nut im Kontakt steht. Einerseits sollte der Mitnehmerbolzen mit den beiden Kontaktflächen 62 möglichst reibungslos den Kontaktflächen 52 der Nut entlanggleiten. Andererseits sollte der Mitnehmerbolzen sich bezüglich dem Verstellhebel senkrecht zu den Kontaktflächen nicht bewegen können, damit der Verstellhebel im Betrieb nicht um den Mitnehmerbolzen vibriert. Der Mitnehmerbolzen ist ein- oder zweifach in dem Verstellring 4 gelagert. Bei der dargestellten zweifachen Lagerung ist der Verstellring U-förmig ausgebildet und der Verstellhebel verläuft in der Mitte des U-förmigen Profils. Der Mitnehmerbolzen weist eine mittige doppelseitige Ausnehmung auf, über welche der Verstellring verschiebbar ist. Der Mitnehmerbolzen ist in axialer Richtung gesichert, indem die Seitenwände der beiden Ausnehmungen 61 bündig am Verstellhebel 5 anliegen.
Gemäss der Darstellung in der Fig. 6 können die Ausnehmungen 61 in den Mitnehmerbolzen unterschiedlich ausgeführt sein. Von links nach rechts sind drei Mitnehmerbolzen dargestellt, mit jeweils zwei abgerundeten Ausnehmungen (Links), zwei zu einem Spitz verlaufenden, V-förmigen Ausnehmungen (Mitte) sowie zwei rechteckigen Ausnehmung (Rechts). Ein Mitnehmerbolzen kann auch zwei unterschiedlich ausgebildete Ausnehmungen aufweisen, beispielsweise auf der einen Seite eine rechteckige und auf der anderen Seite eine abgerundete. Auf diese Weise kann die Ausrichtung des Mitnehmerbolzens bezüglich des Verstellhebels definiert werden. Die Oberflächen der Nut des Verstellhebels sind der jeweiligen Ausnehmungen der Mitnehmerbolzen entsprechend geformt. Anstelle von einer oder zwei Ausnehmungen kann der Mitnehmerbolzen auch einen oder zwei Vorsprünge aufweisen, welche mit entsprechend ausgebildeten Ausnehmungen in den Seitenwänden der länglichen Nut des Verstellhebels zusammenwirken. Zur Verbesserung der Gleiteigenschaft des Mitnehmerbolzens in der Nut des Verstellrings, können die Kontaktflächen des Mitnehmerbolzens und/ oder des Verstellhebels speziell gehärtet oder mit einem Gleithilfsmittel beschichtet sein.
Die erfindungsgemässen Leitvorrichtungen können sowohl in Verdichter und/ oder Turbine eines Abgasturboladers zur Aufladung von Zwei- oder Viertakt-Verbrennungsmotoren eingesetzt werden, als auch in Turbinen bei mit Abgasen einer Brennkraftmaschine betriebenen Nutzturbinen.

### Bezugszeichenliste

- 11: Turbinenrad-Nabe
- 110: Verdichterrad-Nabe
- 12: Turbinen-Laufschaufeln
- 120: Verdichter-Laufschaufeln
- 21: Leitschaufel
- 210: Diffusorschaufel
- 22: Schaufelschaft
- 30: Lagergehäuse
- 31: Turbinengehäuse
- 32: Verdichtergehäuse
- 33: Einsatzwand
- 4: Verstellring
- 41: Bohrungen
- 5: Verstellhebel
- 51: Nut
- 52: Kontaktfläche
- 6: Mitnehmerbolzen
- 61: Ausnehmung
- 62: Kontaktfläche

## Patentansprüche

1. Vorrichtung zum Übertragen einer Verstellkraft von einem Verstellring (4) auf einen Schaufelschaft (22) einer drehbar gelagerten Leitschaufel (21, 210) einer verstellbaren Leitvorrichtung, mit einem Verstellhebel (5) sowie einem mit einem Verstellring verbindbaren Mitnehmerbolzen (6), wobei der Verstellhebel an einem Ende mit einem Schaufelschaft (22) einer drehbar gelagerten Leitschaufel (21, 210) einer verstellbaren Leitvorrichtung verbindbar ist, und in das andere Ende des Verstellhebels eine langförmige Nut (51) zum Aufnehmen des Mitnehmerbolzens (6) eingelassen ist, **dadurch gekennzeichnet, dass** der Mitnehmerbolzen (6) und die Nut (51) je zwei Kontaktflächen (52, 62) aufweisen, und dass die Kontaktflächen (62) des Mitnehmerbolzens und die Kontaktflächen (52) der Nut jeweils paarweise aufeinander abgestimmt sind.

2. Vorrichtung nach Anspruch 1, **dadurch gekennzeichnet, dass** der Mitnehmerbolzen (6) eine zylindrische Form aufweist, und dass die Kontaktflächen (62) durch Ausnehmungen (61) in der Mantelfläche des Mitnehmerbolzens gebildet sind.

3. Vorrichtung nach Anspruch 2, **dadurch gekennzeichnet, dass** die Ausnehmungen (62) in der Mantelfläche des Mitnehmerbolzens ein rechteckiges oder ein abgerundetes oder ein V-förmiges Profil aufweisen.

4. Vorrichtung nach Anspruch 2, **dadurch gekennzeichnet, dass** die beiden Ausnehmungen (62) in der Mantelfläche des Mitnehmerbolzens unterschiedliche Profile aufweisen.

5. Vorrichtung nach einem der Ansprüche 1 bis 4, **dadurch gekennzeichnet, dass** die Kontaktflächen (52) der Nut und/ oder die Kontaktflächen (62) des Mitnehmerbolzenes gehärtet oder mit einem Gleithilfsmittel beschichtet sind.

6. Leitvorrichtung mit verstellbaren Leitschaufeln (21, 210), welche Leitschaufeln jeweils mit einem drehbar gelagerten Schaufelschaft (22) verbunden und mit einem mit dem Schaufelschaft verbundenen und auf den Schaufelschaft wirkenden und über einen Verstellring (4) angetriebenen Verstellhebel (23) um den Schaufelschaft drehbar sind, **dadurch gekennzeichnet, dass** die Leitvorrichtung zur Übertragung einer Verstellkraft vom Verstellring (4) auf den Schaufelschaft (22) eine Vorrichtung nach einem der Ansprüche 1 bis 5 umfasst.

7. Leitvorrichtung nach Anspruch 6, **dadurch gekennzeichnet, dass** der Mitnehmerbolzen (6) in Bohrungen (41) des Verstellrings (4) drehbar gelagert ist.

8. Verdichter mit einen Diffusor mit verstellbaren Diffusorschaufeln, **dadurch gekennzeichnet, dass** der Diffusor eine Leitvorrichtung nach einem der Ansprüche 6 oder 7 umfasst.

9. Abgasturbine, **gekennzeichnet durch** eine Leitvorrichtung nach einem der Ansprüche 6 oder 7.

10. Abgasturbolader, **gekennzeichnet durch** einen Verdichter nach Anspruch 8 und/oder **durch** eine Abgasturbine nach Anspruch 9.
